(19) **Europäisches Patentamt / European Patent Office / Office européen des brevets**

(11) **EP 4 365 624 A1**

(12) **EUROPEAN PATENT APPLICATION**

(43) Date of publication:
**08.05.2024 Bulletin 2024/19**

(21) Application number: **22205511.3**

(22) Date of filing: **04.11.2022**

(51) International Patent Classification (IPC):
**G01S 7/41** *(2006.01)*      **G01S 13/58** *(2006.01)*
**G01S 13/72** *(2006.01)*      **G01S 13/931** *(2020.01)*
**G06T 3/40** *(2024.01)*      **G06V 10/82** *(2022.01)*

(52) Cooperative Patent Classification (CPC):
**G01S 7/417; G01S 7/415; G01S 13/58;**
**G01S 13/723; G01S 13/931; G06V 10/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Magna Electronics Sweden AB**
**447 83 Vårgårda (SE)**

(72) Inventor: **GEBELE, Robert**
**Unterschleissheim (DE)**

(74) Representative: **Westpatent AB**
**Almekärrsvägen 11**
**443 39 Lerum (SE)**

(54) **DETECTION AND CLASSIFICATION OF MOVING OBJECTS IN RADAR DATA USING DEEP LEARNING**

(57)    The present disclosure relates to a computer-implemented method for providing a machine learning model, where the machine learning model is adapted to provide predictions regarding position and over-ground velocity vectors for detected multiple moving objects (150, 160) in a traffic environment using vehicle sensor data. The method comprises, for each radar measurement cycle in a plurality of radar measurement cycles for detecting the objects (150, 160);

obtaining (S100) detections (151, 161) related to the objects (150, 160);

representing (S200) the detections (151, 161) by means of Cartesian detection coordinates and a transformed Doppler velocity ($\tilde{v}$), having a ground frame of reference, in a detection list; and

discretizing (S300) the detection list into an occupancy pixel grid in the form of a 3D array $g \in \mathbb{R}^{n_x \times n_y \times n_c}$.

A first dimension $n_x$ and a second dimension $n_y$ correspond to the Cartesian coordinates for the detections (151, 161) and a third dimension $n_c$ comprises at least two channels, a first channel representing the detection magnitude, and a second channel representing the transformed Doppler velocity ($\tilde{v}$).

The method further comprises

training (S400) an object detection model in a neural network using the 3D array $g$ and corresponding ground truth labels for the objects (150, 160), where the ground truth labels comprise true values for position, extent, over-ground velocity vector and object class for all data samples,

where the object detection model is based on YOLO, You Only Look Once, using the three dimensions $n_x \times n_y \times n_c$.

FIG. 1

**Description**

TECHNICAL FIELD

The present disclosure relates to methods, sensor system control units, and vehicles for implementing Deep Learning methods to detect and classify objects, based on the method YOLO, You Only Look Once, where the objects have been detected by means of vehicle sensors.

BACKGROUND

Vehicle environment detection systems, such as for example camera systems, radio detection and ranging (radar) systems and light detection and ranging (lidar) systems, can be mounted on a vehicle in order to detect objects in a vicinity of the vehicle. The obtained detections can be used to implement functions such as speed control and collision prevention, ego motion estimation and scene understanding.

There exist Deep Learning methods to detect and classify moving objects, for example using the method YOLO, You Only Look Once, that for example is described in J. Redmon, S. Divvala, R. Girshick and A. Farhadi, "You Only Look Once: Unified, Real-Time Object Detection," arXiv, 2015, initially being intended for classifying objects in vision data.

YOLO has also been implemented for radar sensors, as for example described in Rodrigo Perez, Falk Schubert, Ralph Rasshofer and Erwin Biebl, "Deep Learning Radar Object Detection and Classification for Urban Automotive Scenarios", 2019 Kleinheubach Conference, and Biesbroeck, J.P.A. "Neural network based multiple object tracking for automotive FMCW radar data", Eindhoven University of Technology 2018.

However, there is still a need to improve Deep Learning methods for detecting and classifying objects that have been detected by means of vehicle radar sensors based on YOLO.

SUMMARY

It is an object of the present disclosure to provide improved Deep Learning methods for detecting and classifying objects that have been detected by means of vehicle radar sensors based on YOLO.

This object is obtained at least in part by a method computer-implemented method for providing a machine learning model. The machine learning model is adapted to provide predictions regarding position and over-ground velocity vectors for detected multiple moving objects in a traffic environment using vehicle sensor data. The method comprises, for each radar measurement cycle in a plurality of radar measurement cycles for detecting the objects, obtaining detections related to the objects, representing the detections by means of Cartesian detection coordinates and a transformed Doppler velocity, having a ground frame of reference, in a detection list, and discretizing the detection list into an occupancy pixel grid in the form of a 3D array $g \in \mathbb{R}^{n_x \times n_y \times n_c}$.

A first dimension $n_x$ and a second dimension $n_y$ correspond to the Cartesian coordinates for the detections, and a third dimension $\mathbf{n_c}$ comprises at least two channels, a first channel representing the detection magnitude, and a second channel representing the transformed Doppler velocity.

The method further comprises training an object detection model in a neural network using the 3D array $g$ and corresponding ground truth labels for the objects, where the ground truth labels comprise true values for position, extent, over-ground velocity vector and object class for all data samples. The object detection model is based on YOLO, You Only Look Once, using the three dimensions $n_x \times n_y \times n_c$.

In this way, radar data is transformed from a point-cloud to a pixel grid where the x-y-dimensions correspond to a birds-eye-view, not to a depth-projection as in camera images. The 2 channels mentioned contain the signal strength, and the radial Doppler velocity of the radar measurements, respectively.

The NN is enabled to predict an over-ground velocity vector of the objects. This is enabled by including the Doppler velocity, by transforming the measured Doppler to the ground-stationary frame of reference and combining this with the full spatial 2D information.

According to some aspects, the machine learning model is adapted to provide predictions regarding at least one of extent and object class.

According to some aspects, the method comprises normalizing the detection magnitudes and transformed Doppler values by specifying an expected or measured maximum value $m_{max}$ and $v_{max}$, respectively.

This means that the input values for the NN are of order 1.

According to some aspects, for each radar measurement cycle, the discretizing comprises initializing all grid pixels with zeros such that the 3D array $g = 0$, and initializing an array $d \in \mathbb{N}_0^{n_x \times n_y}$, for keeping track of the detection counts in each spatial pixel, with zeros such that $d = 0$. For each radar detection, the discretizing further comprises transforming its position from polar coordinates $r$, $\varphi$ to Cartesian coordinates $x$, $y = r \cos \varphi$, $r \sin \varphi$ and determining the corresponding pixel coordinates according to $(i,j) \in [1, n_x] \times [1, n_y]$, such that $x \in [(i - 1)\Delta x, i \, \Delta x)$, $y \in [(j - 1)\Delta y, j \, \Delta y)$, where $\Delta x$, $\Delta y$ is the resolution, increasing (S340) the magnitude channel of this pixel by the detection magnitude

$$g[i,j,1] \mathrel{+}= \frac{m}{m_{max}}$$

increasing the Doppler channel of this pixel by the transformed Doppler velocity according to

$$g[i,j,2] = \frac{\tilde{v}}{v_{max}}$$

increasing the detection count of this pixel by one according to

$$d[i,j] \mathrel{+}= 1$$

and, for all pixels $(i,j)$ with multiple detections,

$$d[i,j] > 1,$$

calculating the mean of their transformed Doppler velocities:

$$g[i,j,2] \mathrel{/}= d[i,j].$$

This provides an efficient discretizing.

According to some aspects, the method comprises forming $N_x \times N_y$ rectangular cells where $N_x$ is the number of rectangular cells along an x-axis and $N_y$ is the number of rectangular cells along a y-axis, each rectangular cell having a length 1 and a width w, such that the output of the neural network for one input 3D array $\boldsymbol{g}$ then consists of a total of $N = N_x \cdot N_y \cdot N_{obj} \cdot N_{par}$ neurons with values in the range **[0,1]**, where $N_{par}$ is the number of parameters specifying one object prediction **P** and $N_{obj}$ is the fixed maximum number of objects each cell is capable of predicting. According to some aspects, the number $N_{par}$ of parameters specifying one object prediction **P** equals $7+N_c$, where $N_c$ denotes the number of object classes, where the parameters specifying each object prediction **P** comprise:

- existence probability $P_1 = p$
- box center position $(P_2, P_3) = (\hat{x}, \hat{y})$
- box length, width $(P_4, P_5) = (\hat{l}, \hat{w})$
- velocity (over ground) $(P_6, P_7) = (\hat{v}_x, \hat{v}_y)$
- class probabilities $(P_8, ..., P_{7+N_c}) = c_k$ $(k = 1...N_c)$

where the hats ^ over symbols indicate that these symbols are normalized variables.

According to some aspects, the method comprises providing ground truth as labeled boxes consisting of true values for all the parameters corresponding to the predictions $(P_2, ..., P_7)$, as well as the true object class $(P_8, ..., P_{7+N_c})$, for all data samples. Before training, the method comprises assigning truth objects to the corresponding grid cells, depending on which cell the box center lies in, re-scaling the physical parameter values to the normalized ones with range **[0,1]** in the same way as the predictions are rescaled, and forming a full truth vector for one object in the form:

$$\boldsymbol{T} = \left(T_1 = 1, T_2, ...., T_{7+N_c}\right)$$

$$= \left(1, \hat{X}, \hat{Y}, \hat{L}, \hat{W}, \hat{V}_x, \hat{V}_y, C_1, ..., C_{N_c}\right)$$

Capital letters distinguish the components of the truth from the predictions **P.**

According to some aspects, the training comprises minimizing a loss function according to

$$L = \lambda_1 L_1 + \lambda_2 L_2 + \lambda_3 L_3 + \lambda_4 L_4$$

where the factors $\lambda_i$ are used to put different weight on the individual terms according to:

- true objects: $L_1 = \sum_i \delta_i^{\text{obj}} (1 - p_i)^2$

- no true objects: $L_2 = \sum_i \delta_i^{\text{noObj}} (0 - p_i)^2$

- box position & size: $L_3 = \sum_i \delta_i^{\text{obj}} \left[ (\hat{X}_i - \hat{x}_i)^2 + (\hat{Y}_i - \hat{y}_i)^2 + \left( \sqrt{\widehat{L}_i} - \sqrt{\hat{l}_i} \right)^2 + \left( \sqrt{\widehat{W}_i} - \sqrt{\widehat{w}_i} \right)^2 \right]$

- velocity vector: $L_4 = \sum_i \delta_i^{\text{obj}} \left[ (\hat{V}_{x,i} - \hat{v}_{x,i})^2 + (\hat{V}_{y,i} - \hat{v}_{y,i})^2 \right]$

- object class : $L_5 = \sum_i \delta_i^{\text{obj}} \sum_k (C_{k,i} - c_{k,i})^2$ .

The sums over $i = 1 \ldots (N_x \cdot N_y \cdot N_{obj})$ are over all objects in all grid cells, and $k = 1 \ldots N_c$ over the object classes, and where the symbol $\delta_i^{\text{obj}}$ is equal to **1** if there is a true object that is associated to the predictor **i,** and **0** otherwise, whereas $\delta_i^{\text{noObj}} = 1 - \delta_i^{\text{obj}}$

This means that training according to the present disclosure can be based on well-known loss functions. In principle, the present method can be applied to any NN architecture that takes input of the form **g** and outputs a prediction vector **P** $\in$ **[0, 1]$^N$.**

According to some aspects, the third dimension $n_c$ comprises a third channel with the standard deviation, or maximum absolute difference, of the transformed and normalized Doppler velocity.

This means that the negative impact of micro-Doppler on the group velocity estimate can be reduced. Also, consequently, the third dimension $n_c$ may comprise any sutiable channels.

This object is also achieved by means of further methods, control unit arrangements and computer programs that are associated with the above advantages.

BRIEF DESCRIPTION OF THE DRAWINGS

The present disclosure will now be described in detail with reference to the appended drawings, where:

Figure 1        shows a schematic top view of a vehicle with a sensor system;

Figure 2        shows a plurality of rectangular cells;

Figure 3        schematically illustrates a control unit;

Figure 4        shows an example computer program product;

Figure 5A      is a flow chart illustrating methods;

Figure 5B      is a flow chart illustrating methods within method step S300 of Figure 5A; and

Figure 6        is a flow chart illustrating further methods.

DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

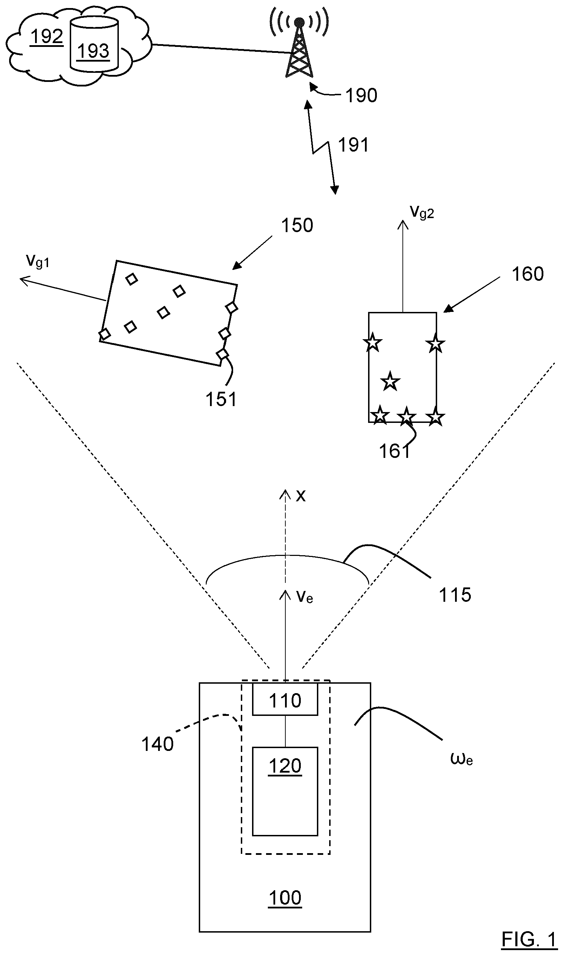

Figure 1 shows a schematic top view of a vehicle 100 equipped with a vehicle sensor system 140. The vehicle moves in a direction with velocity vector $v_{ego}$. The vehicle sensor system 140 comprises a vehicle sensor 110 and a control unit arrangement 120.

The control unit arrangement 120 is arranged to control operation of the vehicle sensor 110, and to obtain data from the vehicle sensor, such as detections or data points corresponding to objects 150, 160 in the vicinity of the vehicle 100.

The vehicle sensor 110 is associated with a field of view 115, which may be a 360-degree field of view, or a more limited field of view as shown in Figure 1. Two objects 150, 160 are located in the field of view 115. A first object 160 generates a data point marked by a star 161. A second object 150 generates a data point marked by a square 151.

The vehicle sensor 110 may comprise a single sensor unit or a plurality of sensor units, potentially of different type and/or of different configuration. Here, the vehicle sensor 110 is a radar sensor 110.

The radar sensor 110 is arranged to generate a number of data points comprising coordinates in a relative coordinate system, i.e., relative to the location and orientation of the sensor.

The data points may also comprise additional information, such as signal strength values, frequency values, and measures of signal-to-noise ratio (SNR).

One or more time-stamps may also be associated with the detections. The time stamps may be assigned per data point or be common to a set of data points.

A data point, in general, is a value or collection of values representing a configuration of an object or part of an object in an environment, such as in a vicinity of a vehicle. A data point may also comprise a velocity estimate obtained from a Doppler shift of a received waveform, and an angle or bearing obtained from an angle of arrival of a reflected sensor signal waveform. The velocity data may in some cases be quantized into moving or stationary, since some aspects of the methods disclosed herein comprises discarding data points related to stationary objects.

A sensor data point is at times referred to as a detection. According to some aspects, these terms can be considered equivalent unless otherwise explicitly stated.

New data points are produced more or less continuously by the sensor in cycles or scans. Most sensor systems generate detection data on a regular basis, with a cycle interval of T seconds. For instance, the interval T may correspond to a frame length of a radar signal, or to an image processing duration of a camera-based sensor, or to a scan period of a laser scanner. Detections may be stored and retrieved for processing as needed.

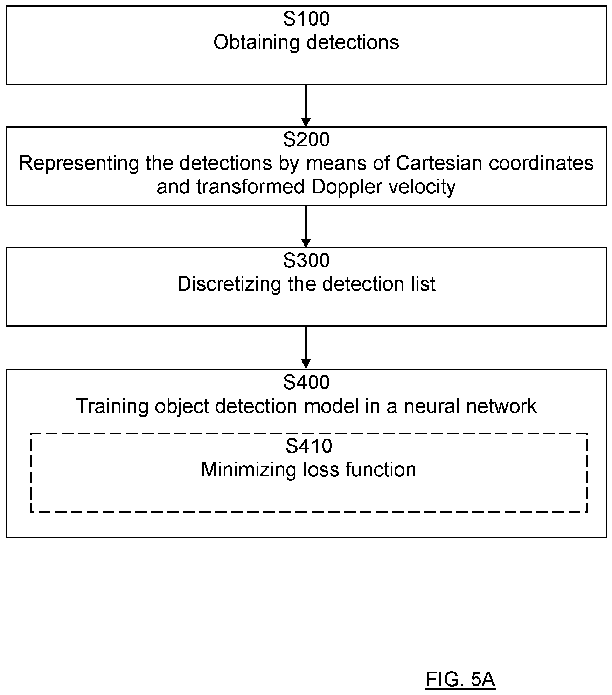

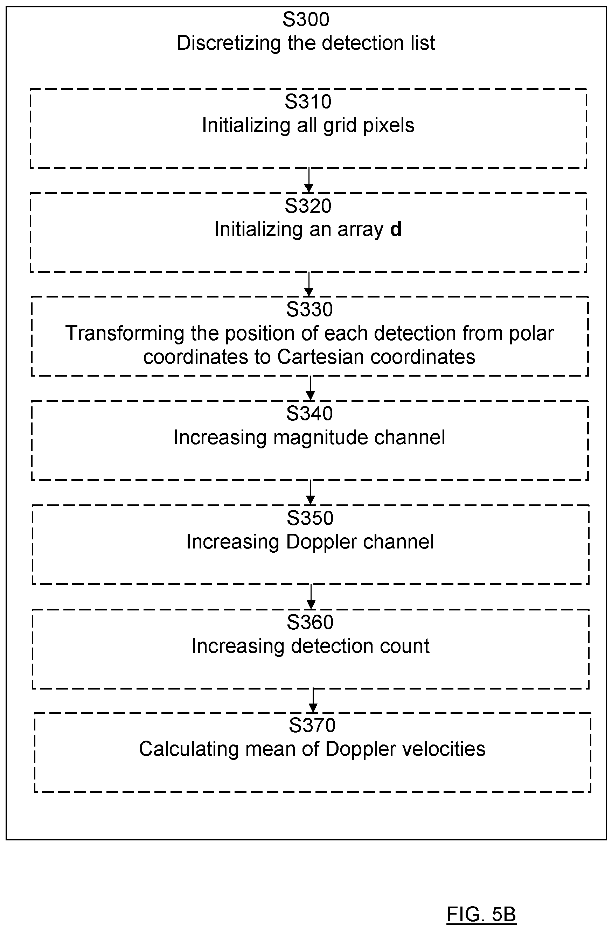

Each detection, here each radar detection 151, 161, comprises information of a measured range r, azimuth angle φ, relative Doppler velocity v and magnitude m. Alternatively, the signal-to-noise ratio could be used similarly. Given the current ego speed $v_e$ and yaw rate $\omega_e$ provided by the ego vehicle 100, the detections 151, 161 can be classified into ground stationary versus moving detections, using well known standard methods. Only moving detections will be considered in the following. With reference also to Figure 5, the present disclosure relates to a computer-implemented method for providing a machine learning model, where the machine learning model is adapted to provide predictions regarding position and over-ground velocity vectors $v_{g1}$, $v_{g2}$ for detected multiple moving objects 150, 160 in a traffic environment using vehicle sensor data. For each radar measurement cycle in a plurality of radar measurement cycles for detecting the objects 150, 160, the method comprises obtaining S100 detections 151, 161 related to the objects 150, 160 and representing S200 the detections 151, 161 by means of Cartesian detection coordinates and a transformed Doppler velocity $\tilde{v}$, having a ground frame of reference, in a detection list.

This means that in order for a neural network (NN) to be able to predict over-ground velocity vectors of the objects, without having to input the ego speed $v_e$ and yaw rate $\omega_e$ as auxiliary scalar inputs, and having the NN to learn the corresponding transformations as well, the Doppler velocities v of the detections are transformed to the ground frame of reference, according to some aspects via

$$\tilde{v} = v + \frac{v_e X + \omega_e (Y_s X - X_s Y)}{R} \qquad (1)$$

where $(X, Y) = (X_s + x, Y_s + y)$ are the detection coordinates in vehicle coordinates (= origin at the center of rotation of the ego vehicle, i.e. center of the rear axil for front axle steering). $R = \sqrt{X^2 + Y^2}$ is the corresponding range, and

($X_s$, $Y_s$) is the location of the radar sensor in vehicle coordinates.

In other words, $\tilde{v}$ is the Doppler velocity that would have been measured at that position if the ego vehicle 100 had been stationary. Therefore, these transformed values can be used to infer the over ground velocity vector of an object in the same way in which the relative velocity vector could be inferred from $v$.

If there are multiple detections within one spatial pixel, their magnitudes are added, while for the Doppler channel the mean is taken.

The method further comprises discretizing S300 the detection list into an occupancy pixel grid in the form of a 3D array $g \in \mathbb{R}^{n_x \times n_y \times n_c}$ where a first dimension $n_x$ and a second dimension $n_y$ correspond to the Cartesian coordinates for the detections 151, 161 and a third dimension $n_c$ comprises at least two channels, a first channel representing the detection magnitude, and a second channel representing the transformed Doppler velocity $\tilde{v}$. The pixels in the grid do not need to correspond to single detection, it is possible that multiple detections are aggregated into one pixel.

There are at least $n_c = 2$ channels, one for the detection magnitude, and one for the Doppler velocity. For the two spatial dimensions, the physical boundaries are specified, as well as the number of pixels ($n_x$, $n_y$) defining the resolution ($\Delta x, \Delta y$). As an example illustrating the above, for a forward looking radar sensor 110, with $x$ pointing in the forward direction, the following is chosen:

$$x \in [0, 100]\,\mathrm{m} \qquad n_x = 500 \qquad \Rightarrow \qquad \Delta x = 20\,\mathrm{cm}$$

$$y \in [-25, 25]\,\mathrm{m} \qquad n_y = 250 \qquad \Rightarrow \qquad \Delta y = 20\,\mathrm{cm}$$

This yields a spatial pixel resolution of 20×20cm. Together with the two channels, the full grid size would then be 500× 250x2. The specific parameter values to be used depend on the specifications of the radar sensor, as well as on the desired accuracy of the method.

The method also comprises training S400 an object detection model in a neural network using the 3D array $g$ and corresponding ground truth labels for the objects 150, 160, where the ground truth labels comprise true values for position, extent, over-ground velocity vector and object class for all data samples. The object detection model is based on YOLO, You Only Look Once, using the three dimensions $n_x \times n_y \times n_c$.

According to some aspects, the term sample refers one full input grid which is fed to the NN, and which is constructed from all radar detections in one radar measurement cycle.

In this way, radar data is transformed from a point-cloud to a pixel grid where the x-y-dimensions correspond to a birds-eye-view, not to a depth-projection as in camera images. The 2 channels mentioned contain the signal strength, and the radial Doppler velocity of the radar measurements, respectively.

The NN is enabled to predict an over-ground velocity vector of the objects. This is enabled by including the Doppler velocity, by transforming the measured Doppler to the ground-stationary frame of reference and combining this with the full spatial 2D information.

According to some aspects, the machine learning model is adapted to provide predictions also regarding at least one of extent and object class.

According to some aspects, the method comprises normalizing the detection magnitudes and transformed Doppler values by specifying an expected or measured maximum value $m_{max}$ and $v_{max}$, respectively.

This means that the input values for the NN are of order 1.

According to some aspects, for each radar measurement cycle, the discretizing S300 comprises initializing S310 all grid pixels with zeros such that the 3D array $g = 0$, initializing S320 an array $d \in \mathbb{N}_0^{n_x \times n_y}$, for keeping track of the detection counts in each spatial pixel, with zeros such that $d = 0$. The discretizing S300 further comprises, for each radar detection 151, 161, transforming S330 its position from polar coordinates ($r, \varphi$) to Cartesian coordinates ($x$, $y$) = ($r \cos \varphi$, $r \sin \varphi$) and determining the corresponding pixel coordinates according to

$$(i, j) \in [1, n_x] \times [1, n_y],$$

such that

$$x \in [(i-1)\Delta x, i\,\Delta x),\ \ y \in [(j-1)\Delta y, j\,\Delta y),$$

where $\Delta x$, $\Delta y$ is the resolution.

The discretizing S300 also comprises increasing S340 the magnitude channel of this pixel by the detection magnitude

$$g[i,j,1] \mathrel{+}= \frac{m}{m_{max}} \qquad (2)$$

increasing S350 the Doppler channel of this pixel by the transformed Doppler velocity according to

$$g[i,j,2] = \frac{\tilde{v}}{v_{max}} \qquad (3)$$

increasing S360 the detection count of this pixel by one according to

$$d[i,j] \mathrel{+}= 1 \qquad (4)$$

and, for all pixels i,j with multiple detections, $d[i,j] > 1$,
calculating S370 the mean of their transformed Doppler velocities:

$$g[i,j,2] \mathrel{/}= d[i,j]. \qquad (5)$$

This provides an efficient discretizing.

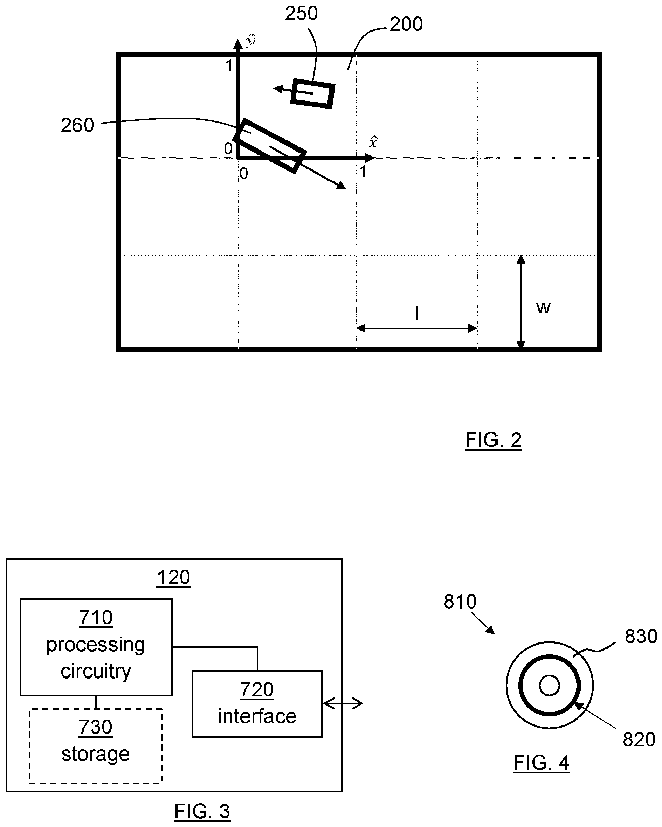

According to some aspects, with reference to Figure 2, the method comprises forming $N_x \times N_y$ rectangular cells 200 where $N_x$ is the number of rectangular cells 200 along an x-axis and $N_y$ is the number of rectangular cells 200 along a y-axis, each rectangular cell 200 having a length 1 and a width w. According to some aspects, the x-range and y-range are split equidistantly.

The output of the neural network for one input 3D array $\boldsymbol{g}$ then consists of a total of $N = N_x \cdot N_y \cdot N_{obj} \cdot N_{par}$ neurons, in this example with values in the range **[0,1]**, where $N_{par}$ is the number of parameters specifying one object prediction **P** and $N_{obj}$ is the fixed maximum number of objects each cell is capable of predicting.

Figure 2 is thus a depiction of example outputs, predictions **P**, of the NN, and how they would be rendered in the birds-eye-view. In the cells there are boxes that represent objects, in the example there are two boxes 250, 260 in one cell 200. Figure 2 thus shows example predictions in one grid cell 200 for $N_x = 4$, $N_y = 3$, $N_{obj} = 2$. All other cells also have 2 predictors, which are not shown here.

According to some aspects, the number $N_{par}$ of parameters specifying one object prediction **P** equals $7 + N_c$, where $N_c$ denotes the number of object classes, where the parameters specifying each object prediction **P** comprise:

- existence probability $P_1 = p$
- box center position $(P_2, P_3) = (\hat{x}, \hat{y})$
- box length, width $(P_4, P_5) = (\hat{l}, \hat{w})$
- velocity over ground $(P_6, P_7) = (\hat{v}_x, \hat{v}_y)$
- class probabilities $(P_8, ..., P_{7+N_c}) = c_k$ $(k = 1...N_c)$

where the hats $\wedge$ over symbols indicate that these symbols are normalized variables.

An example visualization of the predictions for one of the grid cells 200 is shown in Figure 2. For $(\hat{x}, \hat{y})$, the minimum and maximum values **0,1** correspond to the boundaries of the grid cell 200. For $l$, $w$, $v_x$, $v_y$ the maximum physical values can be specified before training the NN, e.g. $l_{max} = 20$ m, $w_{max} = 5$ m, $v_{max} = 70\frac{m}{s}$ , and then obtains the physical values as $l = \hat{l} \cdot l_{max}$ etc.

It should be noted that the probability prediction $\boldsymbol{p}$ can be used to obtain a variable number of actual predicted objects: only objects with $p > p_0$ will at prediction time considered as predictions, whereas objects with $p < p_0$ are non-predictions. The optimal threshold $p_0$ can for example be obtained by an ROC (Receiver Operating Characteristic) optimization after training the NN.

According to some aspects, the method comprises providing ground truth as labeled boxes consisting of true values for all the parameters corresponding to the predictions (**$P_2$, ..., $P_7$**), as well as the true object class (**$P_8$, ..., $P_{7+N_c}$**), for all data samples.

Here, $P_1$ is not used, since only actual objects are labeled, and the true value T1 corresponding to the prediction P1 is always = 1. $P_1$ is therefore omitted here, only variable parameters which have to be provided by the labels being listed. The constant T1=1 can be added for all labels, see equation (6) below.

According to some aspects, before training S400, the method comprises assigning truth objects to the corresponding grid cells, depending on which cell the box center lies in, re-scaling the physical parameter values to the normalized ones with range [0,1] in the same way as the predictions are rescaled, and forming a full truth vector for one object in the form

$$T = \left( T_1 = 1, T_2, \dots, T_{7+N_c} \right)$$
$$= \left( 1, \hat{X}, \hat{Y}, \hat{L}, \hat{W}, \hat{V}_x, \hat{V}_y, C_1, \dots, C_{N_c} \right) \quad (6)$$

where capital letters distinguish the components of the truth from the predictions **$P$**.

According to some aspects, the training S400 comprises minimizing S410 a loss function according to

$$L = \lambda_1 L_1 + \lambda_2 L_2 + \lambda_3 L_3 + \lambda_4 L_4 \quad (7)$$

where the factors $\lambda_i$ are used to put different weight on the individual terms according to:

• true objects:

$$L_1 = \sum_i \delta_i^{\text{obj}} (1 - p_i)^2 \quad (8)$$

• no true objects:

$$L_2 = \sum_i \delta_i^{\text{noObj}} (0 - p_i)^2 \quad (9)$$

• box position & size:

$$L_3 = \sum_i \delta_i^{\text{obj}} \left[ \left( \hat{X}_i - \hat{x}_i \right)^2 + \left( \hat{Y}_i - \hat{y}_i \right)^2 + \left( \sqrt{\hat{L}_i} - \right. \right.$$

• velocity vector:

$$L_4 = \sum_i \delta_i^{\text{obj}} \left[ \left( \hat{V}_{x,i} - \hat{v}_{x,i} \right)^2 + \left( \hat{V}_{y,i} - \hat{v}_{y,i} \right)^2 \right] \quad (11)$$

• object class:

$$L_5 = \sum_i \delta_i^{\mathrm{obj}} \sum_k \left( C_{k,i} - c_{k,i} \right)^2, \quad (12)$$

where the sums over $i = 1 \dots N_x \cdot N_y \cdot N_{obj}$ are over all objects in all grid cells, and $k = 1 \dots N_c$ over the object classes, and where the symbol $\delta_i^{\mathrm{obj}}$ is equal to **1** if there is a true object that is associated to the predictor $i$, and **0** otherwise, whereas $\delta_i^{\mathrm{noObj}} = 1 - \delta_i^{\mathrm{obj}}$.

Their values depend on the assignment of truth objects to the responsible grid cells, as discussed above. In addition, if $N_{obj} > 1$, the true objects within one cell have to be associated with the corresponding predictors within that cell. In traditional YOLO, this can be done based on the largest intersection over union (IOU) between the true and predicted boxes. Here, according to some aspects, a metric is used that is also nonzero if the boxes do not overlap. For example, the Euclidean distance between the centers of the boxes can used as the association metric to be minimized.

This means that training according to the present disclosure can be based on well-known loss functions.

In principle, the present method can be applied to any NN architecture that takes input of the form $g$ and outputs a prediction vector $P \in [0, 1]^N$. But a typical architecture might consist of several convolutional layers, followed by max-pooling layers, and some fully connected layers at the end, followed by a sigmoid activation for $(P_1, ..., P_7)$ and a soft-max activation for the class probabilities $c_i$.

Table 1 below shows an example of a NN architecture. This is to be regarded as an illustrative example of a possible NN architecture, many other types of NN architectures are of course possible in view of the present disclosure.

Table 1: Example of NN architecture

| Type | Size/Stride | Output | Channels | |
|---|---|---|---|---|
| Input | | 256 × 128 | 2 | |
| Convolution | 3 × 3 | 256 × 128 | 8 | |
| Max Pool | 2 × 2 / 2 | 128 × 64 | | |
| Convolution | 3 × 3 | 128 × 64 | 16 | |
| Max Pool | 2 × 2 / 2 | 64 × 32 | | |
| Convolution | 3 × 3 | 64 × 32 | 32 | |
| Convolution | 1 × 1 | 64 × 32 | 16 | x 1 |
| Convolution | 3 × 3 | 64 × 32 | 32 | |
| Max Pool | 2 × 2 / 2 | 32 × 16 | | |
| Convolution | 3 × 3 | 32 × 16 | 32 | |
| Convolution | 1 × 1 | 32 × 16 | 16 | x 1 |
| Convolution | 3 × 3 | 32 × 16 | 32 | |
| Max Pool | 2 × 2 / 2 | 16 × 8 | | |
| Convolution | 3 × 3 | 16 × 8 | | |
| Convolution | 1 × 1 | 16 × 8 | 32 | x 2 |
| Convolution | 3 × 3 | 16 × 8 | 64 | |
| Max Pool | 2 × 2 / 2 | 8 × 4 | | |
| Convolution | 3 × 3 | 8 × 4 | 128 | |
| Convolution | 1 × 1 | 8 × 4 | 64 | x 2 |
| Convolution | 3 × 3 | 8 × 4 | 128 | |
| Fully Connected | | 1 × 1 | 2048 | |
| Fully Connected | | 1 × 1 | 1024 | |
| Object List Output | | 10 × 6 | 12 | |

Here, in accordance with some aspects, there are 18 convolutional layers, for a grid resolution $(n_x, n_y, n_c) = (256,128,2)$, $(N_x, N_y) = (4,3)$ grid cells, $N_c = 3$ object classes, and $N_{obj} = 6$ predicted objects per cell, that could be used.

Each convolutional layer is understood to be followed by a batch-normalization layer, and all convolutional and fully connected layers are followed by an activation function, for example a ReLU.

The size **(10,6)** of the object list output layer corresponds to the number of object parameters $N_{par}$ = 7 + 3 and the number of objects per cell, whereas the number of output channels corresponds to the total number of grid cells $N_x \cdot N_y$ **= 12.**

Some aspects of the present disclosure correspond to traditional YOLO, like dividing the output space into grid cells, predicting bounding boxes with existence probabilities, locations, sizes and object classes, and the inspiration for the given example NN architecture.

Due to the different nature of the radar data traditional YOLO has to be implemented in new ways in accordance with the present disclose. For example, the radar data are transformed from a point-cloud to a pixel gird.

Even though the pixel grid has the same dimension as in YOLO, their meanings are different: the x-y-dimensions correspond to the birds-eye-view, not to a depth-projection as in camera images, and the 2 channels contain the signal strength, and the radial Doppler velocity of the radar measurements, respectively.

The NN also predicts the over-ground velocity vector, equivalently, the speed and orientation, of the objects. This is enabled by including the Doppler velocity and by transforming the measured Doppler velocity to the ground-stationary frame of reference, and by combining this with the full spatial 2D information.

The loss function is adapted to these additional predictions.

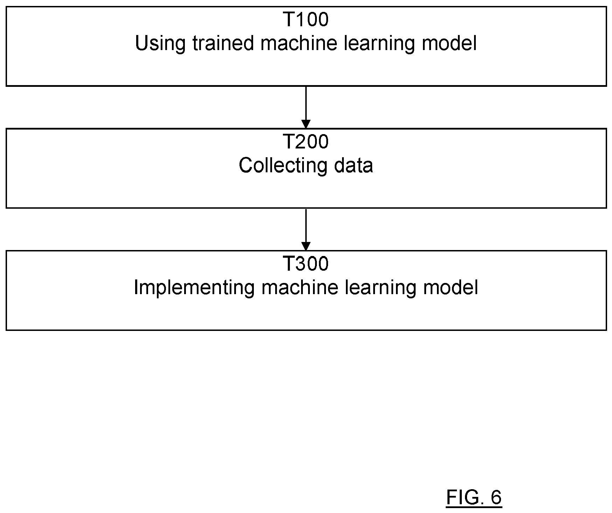

With reference to Figure 6, the present disclosure also relates to a computer-implemented method for detecting multiple moving objects 150, 160. The method comprises using T100 the trained machine learning model being trained in accordance with the computer-implemented method as described herein, and/or being trained in accordance with the computer-implemented method as described herein, and using (T200) one or more radar sensors for collecting data.

The computer-implemented method further comprises implementing T300 the machine learning model by, for each input 3D array $g$, outputting object predictions $P$ for each detected object 150, 160.

According to some aspects, each object prediction P comprises:

- existence probability $P_1 = p$

- box center position $(P_2, P_3) = (\hat{x}, \hat{y})$

- box length, width $(P_4, P_5) = (\hat{l}, \hat{w})$

- velocity (over ground) $(P_6, P_7) = (\hat{v}_x, \hat{v}_y)$

- class probabilities $(P_8, ..., P_{7+N_c}) = c_k$ $(k = 1...N_c)$

where the hats ^ over symbols indicate that these symbols are normalized variables.

According to some aspects, the training of the NN is performed offline using a remote server, using a large dataset that has been collected and labelled before. Once the NN has been trained, it can be deployed on whatever computing hardware that is used in the vehicle 100, such as the control unit arrangement 120. It would then run on the vehicle 100 and assist analysis of detect objects 150, 160, without further changing its learned parameters.

Alternatively, once the NN has been trained, it can at least partly be run on a remote server 193. According to some aspects, with reference to Figure 1, the computer-implemented method may be adapted to at least partly run on, and via, external units, for example a communication system 190 that provides wireless communication 191. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 192, such as the remote server 193.

The control unit arrangement 120 may be constituted by a control unit arrangement with one or more control unit parts that can be separate from each other. Some or all control unit parts may be comprised in a control unit arrangement 120 and/or the remote server 193.

The present disclosure relates to a control unit arrangement 120, 19) adapted to control at least one of the computer-implemented method for providing a machine learning model as described herein, and the computer-implemented method for detecting multiple moving objects 150, 160 as described herein.

Figure 3 schematically illustrates, in terms of a number of functional units, the components of the control unit arrangement 120 according to an embodiment.

Processing circuitry 710 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 730. The processing circuitry 710 may further be provided as at least one application specific integrated circuit (ASIC), or field programmable gate array (FPGA) .

Particularly, the processing circuitry 710 is configured to cause the control unit arrangement 120 to perform a set of operations, or steps. These operations, or steps, were discussed above in connection to the various methods described. For example, the storage medium 730 may store the set of operations, and the processing circuitry 710 may be configured to retrieve the set of operations from the storage medium 730 to cause the control unit arrangement 120 to perform the set of operations. The set of operations may be provided as a set of executable instructions. Thus, the processing circuitry 710 is thereby arranged to execute methods and operations as herein disclosed.

The storage medium 730 may also comprise persistent storage, which, for example, can be any single one or combination of magnetic memory, optical memory, solid state memory or even remotely mounted memory.

The control unit arrangement 120 may further comprise a communications interface 720 for communications with at least one other unit such as the radar sensor 110. As such, the communications interface 720 may comprise one or more transmitters and receivers, comprising analogue and digital components and a suitable number of ports for wired or wireless communication.

The processing circuitry 710 is adapted to control the general operation of the control unit arrangement 120 e.g. by sending data and control signals to the external unit and the storage medium 730, by receiving data and reports from the external unit, and by retrieving data and instructions from the storage medium 730. Other components, as well as the related functionality, of the control unit arrangement 120 are omitted in order not to obscure the concepts presented herein.

Figure 4 shows a computer program product 810 comprising computer executable instructions 820 arranged on a computer readable medium 830 to execute any of the methods disclosed herein.

The present disclosure relates to a computer program 810 comprising computer program code which, when executed in a control unit arrangement 120, 193, causes the control unit arrangement 120, 193 to execute the method for providing a machine learning model as described herein.

The present disclosure also relates to a computer program 810 comprising computer program code which, when executed in a control unit arrangement 120, 193, causes the control unit arrangement 120, 193 to execute the method for detecting multiple moving objects 150, 160 as described herein.

In this context, a computer program can be constitued by a computer program product.

According to some aspects, the present disclosure relates to a Deep Learning method to detect and classify moving objects 150, 160 with a radar sensor 110. First the detection list measured by the sensor is discretize into an occupancy grid, and then labeled data are used to train a deep neural network (NN) with an appropriate loss function, to predict for example the existence probability, location, extent, velocity vector, and object class such as for example pedestrian, car, etc. of each moving object. Since the radar sensor 110 also provides data regarding Doppler velocities which are here included as part of the input grids, it is possible predict the velocity vectors for the objects.

The method can be applied to any NN architecture that takes input of the form $g$ and outputs a prediction vector $P \in [0, 1]^N$.

The present disclosure is not limited to the above, but may vary freely within the scope of the appended claims. In the following a plurality of implementation examples are provided.

According to some aspects, the discretization of detections into the occupancy grid, can be modified by using at least one of "smeared discretization", "additional channels", "elevation", "add stationary detections" and "raw radar input data.

Using smeared discretization relates to instead of incrementing the values of one pixel in the magnitude channel for one detection, a smeared distribution (e.g. a Gaussian with specified widths in range and azimuth) is used to increase the values of some of the neighboring pixels, such that the total sum of the increment is equal to the detection magnitude.

Using additional channels relates to that in addition to the magnitude and mean-Doppler channel, a channel is added with the standard deviation, or maximum absolute difference, of the transformed and normalized Doppler velocity. Furthermore, instead of using the mean of the Doppler velocity, the median can be used. This can be helpful to reduce the negative impact of micro-Dopplers on the group velocity estimate. If the Doppler spread instead is used in a separate channel as described before, the micro-Doppler information is still available, and can turn into a useful classification feature. Moreover, additional channels can be added for further detection properties which are provided by the RSP, e.g. the noise threshold, or some quality bits.

Using elevation relates to that if the RSP also provides the elevation angle for each detection, this can be added as an additional input channel, similar to the Doppler channel, or as an additional dimension of the pixel grid.

Using added stationary detections relates to that it is not necessary to exclude ground-stationary detections from the pixel grid. In general, they can be included as well, potentially accompanied by an additional binary channel containing the "is stationary" information. This could help the NN learn some contextuality, e.g. that certain object predictions are more or less likely, given the neighboring stationary environment.

Using raw radar input data relates to that instead of first performing conventional RSP to obtain detections, and then turning the detection list into a pixel grid, it is possible to directly work with the raw radar input data in the form of range-Doppler maps for each virtual antenna channel, or range-Doppler-azimuth(-elevation) maps.

It was mentioned that the x-range and y-range of the grid cells 200 illustrated in Figure 2 were split equidistantly. This is only an example, of course a non-equidistant spacing can be chosen. For instance, it could be advantageous to have a finer resolution in the near range.

Regarding the neural net as exemplified above with reference to Table 1, the specific NN architecture shown is only one example. Many different architectures can be used, for example with skip connections, or a fully convolutional architecture.

So far, the methods according to the present disclosure are adapted for prediction of objects in each radar measurement cycle independently. In order to obtain more smooth trajectories of the predictions, a first step could according to some aspects be to add a conventional filtering step, e.g. a Kalman filter, for post-processing the NN predictions. An alternative approach is to directly use a recurrent neural network (RNN) for keeping memory about previously detected objects.

A typical problem with radar sensors is that they often produce false (or "ghost") objects, e.g. due to wrongly estimated azimuth angles, or radar effects like clutter or multipath. To overcome this, according to some aspects, the NN can be trained not only on real object classes, but also for distinguishing real vs. ghost objects. This can be achieved by adding a corresponding binary class "is ghost" to the predicted object parameters, and adding ghost objects to the training data. If all real objects within the data were already labeled, no additional labeling of ghost objects would be needed.

It is conceivable that the NN would learn to classify ghost objects, given that pixels from the whole input grid can influence the outcome of a particular predicted object, and so the NN can learn to use not only the detections from the given object, but also the context present in the whole scene.

For training of the NN, according to some aspects, so-called anchor boxes can be used, where the anchor boxes are based not only on the predicted positions, but also on the velocities. Furthermore, for associating true and predicted objects during training, according to some aspects, more complex metrics than the simple Euclidean distance metric can be used. For instance, the length and width, as well as the velocity vectors could be included into this metric. Again, this could help the NN to learn faster.

## Claims

1. A computer-implemented method for providing a machine learning model, where the machine learning model is adapted to provide predictions regarding position and over-ground velocity vectors for detected multiple moving objects (150, 160) in a traffic environment using vehicle sensor data, the method comprising, for each radar measurement cycle in a plurality of radar measurement cycles for detecting the objects (150, 160);

   obtaining (S100) detections (151, 161) related to the objects (150, 160);
   representing (S200) the detections (151, 161) by means of Cartesian detection coordinates and a transformed Doppler velocity ($\tilde{v}$), having a ground frame of reference, in a detection list;

   discretizing (S300) the detection list into an occupancy pixel grid in the form of a 3D array $g \in \mathbb{R}^{n_x \times n_y \times n_c}$ where a first dimension $n_x$ and a second dimension $n_y$ correspond to the Cartesian coordinates for the detections (151, 161) and a third dimension $\mathbf{n_c}$ comprises at least two channels, a first channel representing the detection magnitude, and a second channel representing the transformed Doppler velocity ($\tilde{v}$); and
   training (S400) an object detection model in a neural network using the 3D array $\mathbf{g}$ and corresponding ground truth labels for the objects (150, 160), where the ground truth labels comprise true values for position, extent, over-ground velocity vector and object class for all data samples,
   where the object detection model is based on YOLO, You Only Look Once, using the three dimensions $n_x \times n_y \times n_c$.

2. The computer-implemented method according to claim 1, wherein the machine learning model is adapted to provide predictions regarding at least one of extent and object class.

3. The computer-implemented method according to any one of the claims 1 or 2, wherein the method comprises normalizing the detection magnitudes and transformed Doppler values by specifying an expected or measured maximum value $m_{max}$ and $v_{max}$, respectively.

4. The computer-implemented method according to claim 3, wherein, for each radar measurement cycle, the discretizing (S300) comprises

initializing (S310) all grid pixels with zeros such that the 3D array $g$ = 0;

initializing (S320) an array $d \in \mathbb{N}_0^{n_x \times n_y}$ , for keeping track of the detection counts in each spatial pixel, with zeros such that $d = 0$; and, for each radar detection (151, 161)
transforming (S330) its position from polar coordinates $(r, \varphi)$ to Cartesian coordinates $(x,y) = (r\ cos\ \varphi\ ,\ r\ sin\ \varphi)$ and determining the corresponding pixel coordinates according to $(i,j) \in [1, n_x] \times [1, n_y]$, such that $x \in [(i - 1)\Delta x,$ $i\ \Delta x)$, $y \in [(j - 1)\Delta y,\ j\ \Delta y)$, where $\Delta x$, $\Delta y$ is the resolution,
increasing (S340) the magnitude channel of this pixel by the detection magnitude

$$g[i,j,1] += \frac{m}{m_{max}}$$

increasing (S350) the Doppler channel of this pixel by the transformed Doppler velocity according to

$$g[i,j,2] = \frac{\tilde{v}}{v_{max}}$$

increasing (S360) the detection count of this pixel by one according to

$$d[i,j] += 1$$

and, for all pixels $(i,j)$ with multiple detections,

$$d[i,j] > 1,$$

calculating (S370) the mean of their transformed Doppler velocities: $g[i,j,2]\ /\ =\ d[i,j]$.

5. The computer-implemented method according to claim 4, wherein the method comprises forming $N_x \times N_y$ rectangular cells (200) where $N_x$ is the number of rectangular cells (200) along an x-axis and $N_y$ is the number of rectangular cells (200) along a y-axis, each rectangular cell (200) having a length (1) and a width (w), such that the output of the neural network for one input 3D array $g$ then consists of a total of $N = N_x \cdot N_y \cdot N_{obj} \cdot N_{par}$ neurons with values in the range **[0,1],** where $N_{par}$ is the number of parameters specifying one object prediction **P** and $N_{obj}$ is the fixed maximum number of objects each cell is capable of predicting.

6. The computer-implemented method according to claim 5, wherein the number $N_{par}$ of parameters specifying one object prediction **P** equals $7+N_c$, where $N_c$ denotes the number of object classes, where the parameters specifying each object prediction **P** comprise:

- existence probability $P_1 = p$
- box center position $(P_2, P_3) = (\hat{x}, \hat{y})$
- box length, width $(P_4, P_5) = (\hat{l}, \hat{w})$
- velocity (over ground) $(P_6, P_7) = (\hat{v}_x, \hat{v}_y)$
- class probabilities $(P_8, ..., P_{7+N_c}) = c_k\ (k = 1...N_c)$

where the hats ^ over symbols indicate that these symbols are normalized variables.

7. The computer-implemented method according to claim 6, wherein the method comprises

providing ground truth as labeled boxes consisting of true values for all the parameters corresponding to the

predictions ($P_2, ..., P_7$), as well as the true object class ($P_8, ..., P_{7+N_c}$), for all data samples, where, before training (S400), the method comprises

assigning truth objects to the corresponding grid cells, depending on which cell the box center lies in,

re-scaling the physical parameter values to the normalized ones with range **[0,1]** in the same way as the predictions are rescaled,

forming a full truth vector for one object in the form:

$$T = \left(T_1 = 1, T_2, ..., T_{7+N_c}\right)$$
$$= \left(1, \hat{X}, \hat{Y}, \hat{L}, \hat{W}, \hat{V}_x, \hat{V}_y, C_1, ..., C_{N_c}\right)$$

where capital letters distinguish the components of the truth from the predictions **P**.

8. The computer-implemented method according to claim 7, wherein the training (S400) comprises minimizing (S410) a loss function according to

$$L = \lambda_1 L_1 + \lambda_2 L_2 + \lambda_3 L_3 + \lambda_4 L_4$$

where the factors $\lambda_i$ are used to put different weight on the individual terms according to:

• true objects : $L_1 = \sum_i \delta_i^{\text{obj}} (1 - p_i)^2$

• no true objects: $L_2 = \sum_i \delta_i^{\text{noObj}} (0 - p_i)^2$

• box position & size: $L_3 = \sum_i \delta_i^{\text{obj}} \left[ \left(\hat{X}_i - \hat{x}_i\right)^2 + \left(\hat{Y}_i - \hat{y}_i\right)^2 + \left(\sqrt{\hat{L}_i} - \sqrt{\hat{l}_i}\right)^2 + \left(\sqrt{\hat{W}_i} - \sqrt{\hat{w}_i}\right)^2 \right]$

• velocity vector: $L_4 = \sum_i \delta_i^{\text{obj}} \left[ \left(\hat{V}_{x,i} - \hat{v}_{x,i}\right)^2 + \left(\hat{V}_{y,i} - \hat{v}_{y,i}\right)^2 \right]$

• object class : $L_5 = \sum_i \delta_i^{\text{obj}} \sum_k (C_{k,i} - c_{k,i})^2$ ,

where the sums over $i = 1 ... (N_x \cdot N_y \cdot N_{obj})$ are over all objects in all grid cells, and $k = 1 ... N_c$, over the object classes, and where the symbol $\delta_i^{\text{obj}}$ is equal to 1 if there is a true object that is associated to the predictor $i$, and 0 otherwise, whereas $\delta_i^{\text{noObj}} = 1 - \delta_i^{\text{obj}}$ .

9. The computer-implemented method according to any one of the previous claims, wherein the third dimension **$n_c$** comprises a third channel with the standard deviation, or maximum absolute difference, of the transformed and normalized Doppler velocity.

10. A computer-implemented method for detecting multiple moving objects (150, 160) comprising

using (T100) the trained machine learning model being trained in accordance with the computer-implemented method according to any one of the claims 5-7, and/or being trained in accordance with a computer-implemented method according to any one of the claims 5-7;
using (T200) one or more radar sensors for collecting data;

wherein the computer-implemented method comprises

implementing (T300) the machine learning model by, for each input 3D array $g$, outputting object predictions $P$ for each detected object (150, 160).

11. The computer-implemented method according to claim 10, wherein each object prediction $P$ comprises:

- existence probability $P_1 = p$
- box center position $(P_2, P_3) = (\hat{x}, \hat{y})$
- box length, width $(P_4, P_5) = (\hat{l}, \hat{w})$
- velocity (over ground) $(P_6, P_7) = (\hat{v}_x, \hat{v}_y)$
- class probabilities $(P_8, ..., P_{7+N_c}) = c_k$ $(k = 1...N_c)$

where the hats ^ over symbols indicate that these symbols are normalized variables.

12. The computer-implemented methods according to any one of the claims 1-11, further comprising directly using a recurrent neural network, RNN, for keeping memory about previously detected objects.

13. A control unit arrangement (120, 193) adapted to control at least one of the computer-implemented method for providing a machine learning model according to any one of the claims 1-9 and the computer-implemented method for detecting multiple moving objects (150, 160) according to any one of the claims 10 or 11.

14. A computer program (810) comprising computer program code which, when executed in a control unit arrangement (120, 193), causes the control unit arrangement (120, 193) to execute the method for providing a machine learning model according to any one of the claims 1-9.

15. A computer program (810) comprising computer program code which, when executed in a control unit arrangement (120, 193), causes the control unit arrangement (120, 193) to execute the method for detecting multiple moving objects (150, 160) according to any one of the claims 10 or 11.

FIG. 1

FIG. 2

FIG. 3

FIG. 4

S100
Obtaining detections

S200
Representing the detections by means of Cartesian coordinates
and transformed Doppler velocity

S300
Discretizing the detection list

S400
Training object detection model in a neural network

S410
Minimizing loss function

FIG. 5A

**S300**
Discretizing the detection list

**S310**
Initializing all grid pixels

**S320**
Initializing an array **d**

**S330**
Transforming the position of each detection from polar coordinates to Cartesian coordinates

**S340**
Increasing magnitude channel

**S350**
Increasing Doppler channel

**S360**
Increasing detection count

**S370**
Calculating mean of Doppler velocities

FIG. 5B

T100
Using trained machine learning model

T200
Collecting data

T300
Implementing machine learning model

FIG. 6

**EP 4 365 624 A1**

European Patent Office
Europäisches Patentamt
European Patent Office
Office européen des brevets

## EUROPEAN SEARCH REPORT

Application Number

EP 22 20 5511

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SCHUMANN OLE ET AL: "Scene Understanding With Automotive Radar", IEEE TRANSACTIONS ON INTELLIGENT VEHICLES, IEEE, vol. 5, no. 2, 25 November 2019 (2019-11-25), pages 188-203, XP011790609, ISSN: 2379-8858, DOI: 10.1109/TIV.2019.2955853 [retrieved on 2020-05-22] * abstract, p. 188, ll. 5-9; par. III. (p. 189, col. 2, ll. 3-5, 14-25) and (p. 190, col. 1, ll. 7-14, ll. 10-18, ll. 31-35); par. IV.A. (p. 190, col. 2, ll. 32-35); par. IV.B. (p. 191, col. 1, ll. 1-10); par. IV.C. (p. 192, col. 2, ll. 6-8); par. V.A. (p. 195, col. 1, ll. 23-29); par. V.B. (p. 195, col. 2, ll. 8-11, l. 17 to p. 9, col. 1, l. 7 and p. 9, col. 1, ll. 16-18); par. V.C. (p. 10, col. 2, ll. 6-9); par. V.D. (p. 10, col. 2, ll. 11-13); par. VI. (p. 201, col. 2, l. 29 to p. 202, col. 1, l. 4); figures 1,2,9,13,16 * | 1-15 | INV. G01S7/41 G01S13/58 G01S13/72 G01S13/931 G06T3/40 G06V10/82 |
| | ----- | | |
| | -/-- | | TECHNICAL FIELDS SEARCHED (IPC) |
| | | | G01S G06V G06T |

The present search report has been drawn up for all claims

| Place of search | Date of completion of the search | Examiner |
|---|---|---|
| Munich | 23 March 2023 | Visentin, Tristan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 3**

Europäisches Patentamt

European Patent Office

Office européen des brevets

## EUROPEAN SEARCH REPORT

Application Number

EP 22 20 5511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AO ZHANG ET AL: "RADDet: Range-Azimuth-Doppler based Radar Object Detection for Dynamic Road Users", ARXIV.ORG, CORNELL UNIVERSITY LIBRARY, 201 OLIN LIBRARY CORNELL UNIVERSITY ITHACA, NY 14853, 2 May 2021 (2021-05-02), XP081956764, * par. I. (p. 2, col. 1, ll. 14-16 and ll. 21-24); III.B. (p. 4, col. 1, ll. 20-21); par. IV.A.-B.; par. IV.C. (p. 5, col. 1, ll. 7-22); par. IV.D.; par. V.B. (p. 6, col. 2, ll. 20-21); par. VI. (p. 7, col. 2, ll. 6-7); figures 1,2,4 * | 1-15 | |
| Y | DE 10 2018 203591 B3 (CONTI TEMIC MICROELECTRONIC GMBH [DE]) 4 July 2019 (2019-07-04) * paragraphs [0001], [0017], [0052], [0069]; figures 3,4 * | 9 | |
| A | SHELHAMER EVAN ET AL: "Fully Convolutional Networks for Semantic Segmentation", IEEE TRANSACTIONS ON PATTERN ANALYSIS AND MACHINE INTELLIGENCE, vol. 39, no. 4, 1 April 2017 (2017-04-01), pages 640-651, XP055865277, USA ISSN: 0162-8828, DOI: 10.1109/TPAMI.2016.2572683 * the whole document * | 1-15 | TECHNICAL FIELDS SEARCHED (IPC) |

-/--

The present search report has been drawn up for all claims

| Place of search | Date of completion of the search | Examiner |
|---|---|---|
| Munich | 23 March 2023 | Visentin, Tristan |

EPO FORM 1503 03.82 (P04C01)

# EUROPEAN SEARCH REPORT

Europäisches
Patentamt
European
Patent Office
Office européen
des brevets

**Application Number**

EP 22 20 5511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Bochkovskiy Alexey ET AL: "Yolov4: Optimal speed and accuracy of object detection", , 22 April 2020 (2020-04-22), pages 1-17, XP093032778, DOI: 10.48550/arXiv.2004.10934 Retrieved from the Internet: URL:https://arxiv.org/pdf/2004.10934.pdf [retrieved on 2023-03-17] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 23 March 2023 | Visentin, Tristan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

page 3 of 3

## ANNEX TO THE EUROPEAN SEARCH REPORT
## ON EUROPEAN PATENT APPLICATION NO.

EP 22 20 5511

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2023

| Patent document cited in search report | Publication date | Patent family member(s) | Publication date |
|---|---|---|---|
| DE 102018203591 B3 | 04-07-2019 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. REDMON ; S. DIVVALA ; R. GIRSHICK ; A. FARHADI.** You Only Look Once: Unified, Real-Time Object Detection. *arXiv,* 2015
- **RODRIGO PEREZ ; FALK SCHUBERT ; RALPH RASSHOFER ; ERWIN BIEBL.** Deep Learning Radar Object Detection and Classification for Urban Automotive Scenarios. *2019 Kleinheubach Conference, and Biesbroeck*

- **J.P.A.** Neural network based multiple object tracking for automotive FMCW radar data. Eindhoven University of Technology, 2018